# EUROPEAN PATENT APPLICATION

(11) **EP 4 628 350 A1**
(43) Date of publication of application: **08.10.2025**
(21) Application number: 24168748.2
(22) Date of filing: 05.04.2024
(51) Int. Cl.: B60L 50/70, B60L 7/10, B60L 1/00, B60W 30/18, F02D 19/02, F02D 41/02, F02D 41/12, F02M 21/02, H01M 8/04082

(54) **A SYSTEM, A METHOD OF CONTROLLING A SYSTEM, AND A VEHICLE COMPRISING A SYSTEM**

(71) Applicant: VOLVO TRUCK CORPORATION, 405 08 Göteborg (SE)
(72) Inventor: WILHELMSSON, Martin, 423 39 TORSLANDA (SE); STJERNBERG, Oscar, 411 35 GÖTEBORG (SE)
(74) Representative: Kransell & Wennborg KB

(57) **Abstract**

The present disclosure relates to a system (10) for a vehicle (1), the system comprising a hydrogen fuel storage system (20) for storing hydrogen fuel (22); a recirculation hydrogen fuel system (30) for transporting hydrogen fuel, the recirculation hydrogen fuel system having a fuel inlet (32) configured to be in fluid communication with the hydrogen fuel storage system and further a fuel return line (34) to the hydrogen fuel storage system, wherein the recirculation hydrogen fuel system is configured to be in fluid communication with a hydrogen fuel-consuming power source (40), the system further comprising an electrically powered compressor (50) disposed in the recirculation hydrogen fuel system; and wherein the electrically powered compressor is controllable to pressurize hydrogen fuel in the recirculation hydrogen fuel system in response to a determined need for dissipating energy.

## Description

### TECHNICAL FIELD

The disclosure generally relates to systems for vehicles comprising a hydrogen fuel storage system for storing hydrogen fuel. In particular aspects, the disclosure relates to a system, a method for controlling the system and a vehicle comprising the system. The disclosure can be applied to heavy-duty vehicles, such as trucks, buses, and construction equipment, among other vehicle types. Although the disclosure may be described with respect to a particular vehicle, the disclosure is not restricted to any particular vehicle. The vehicle may be a truck using any one of a battery system and a fuel cell system for generating electric power to an electric traction machine. However, the disclosure may also be applicable for other types of vehicles using a fuel cell system for generating electric power, such as e.g. a hybrid vehicle comprising an electric machine, as well as an internal combustion engine for propulsion.

### BACKGROUND

The propulsion systems of vehicles are continuously developed to meet the demands from the market. A particular technical area of vehicle propulsions systems relates to the emission of environmentally harmful exhaust gases. Therefore, other more environmentally friendly alternatives compared to conventional internal combustion engines are evaluated and implemented in vehicles. One example of such alternatives is the use of one or more electric machines for propelling the vehicle, where electric power to the one or more electric machines is generated by at least one fuel cell system.

One of the more important features of electric vehicles relates to their capability to capture kinetic energy from braking and convert it electrically to be stored into the battery system and used for providing propulsive power or for the basic energy needs of supplementary electrical systems.

In comparison to a vehicle propelled solely by an internal combustion engine (ICE), a vehicle powered by a fuel cell system and one or more electric machine may occasionally face challenges with obtaining adequate auxiliary braking. For an ICE operated vehicle, the auxiliary braking can be provided by means of a retarder or by so called engine braking. However, for an electric vehicle, the auxiliary braking functionality may sometimes be a dimensioning factor for the components making up the powertrain system of the vehicle, in particular for the cooling system of the powertrain system. This is at least partly due to the cooling capacity of the cooling system. By way of example, a heavy-duty electric vehicle may often be subject to braking/retardation for long periods, while driving downhill along a route. In electric vehicles, this braking/retardation may generally be carried out by braking using an electric machine which generates power and subsequently charges the batteries of the vehicle. If the braking/retardation periods are long-lasting and extensive, the batteries will eventually become fully charged and cannot no longer provide the required brake power. In such cases, the brake system may activate or operate a brake resistor which is configured to handle the excessive generated heat once the batteries are fully charged. The resistor is heated up using the power produced from the electric machines. For thermal management reasons, the brake resistors need to be cooled during operation of the vehicle.

As a consequence, any auxiliary braking of the vehicle may generally cause the cooling system of the vehicle to handle high levels of excessive energy.

It would be desirable to provide an improved energy management system for managing any excessive energy generated during operation of a vehicle, such as an electric vehicle comprising at least a fuel cell system for powering one or more electric machines.

### SUMMARY

According to a first aspect of the disclosure, there is provided a system for a vehicle, the system comprising a hydrogen fuel storage system for storing hydrogen fuel; a recirculation hydrogen fuel system for transporting hydrogen fuel, the recirculation hydrogen fuel system having a fuel inlet configured to be in fluid communication with the hydrogen fuel storage system and further a fuel return line to the hydrogen fuel storage system, wherein the recirculation hydrogen fuel system is configured to be in fluid communication with a hydrogen fuel-consuming power source. The system further comprises an electrically powered compressor disposed in the recirculation hydrogen fuel system. In addition, the electrically powered compressor is controllable to pressurize hydrogen fuel in the recirculation hydrogen fuel system in response to a determined need for dissipating energy.

The first aspect of the disclosure may seek to improve the management of excessive energy generated during operation of the vehicle, e.g. due to a braking demand for the vehicle, during a stand-still operation of the vehicle with the fuel cells active and/or during any other operations of the vehicle where the fuel cells produce more electrical energy than can be used by, or stored in, one or more components of the electric systems of the vehicle. More specifically, the proposed system may seek to provide an efficient and versatile way of managing excessive energy generated during operation of the vehicle by controlling a compressor disposed in the hydrogen fuel storage and supply system (e.g. the hydrogen fuel storage system and the recirculation hydrogen fuel system) in response to a need for managing generated excessive energy. Managing excessive electrical energy derived from regenerative braking, may be particularly useful in situations where conventional energy storage or dissipation methods are not viable due to battery capacity constraints or other limitations.

A technical benefit of the proposed system includes the enhanced efficiency and flexibility in managing the need for dissipating energy, in which the system can dynamically adjust the operation of the compressor dependent on the need for dissipating excessive energy, while providing adequate pressurizing of the hydrogen fuel for the hydrogen fuel storage system. This capability may thus further allow for a more effective utilization of hydrogen fuel, reducing waste and improving the overall energy efficiency of the vehicle.

The need for dissipating energy can be determined in several different manners, as described herein.

The proposed system is particularly useful when there is a need for transferring excessive energy from a vehicle braking event. In this context, it has been realized that fuel cell electric vehicles generally need additional devices (such as retarders) or sufficiently dimensioned batteries to absorb braking energy generated while driving downhill. Retarders may often result in wastage of energy whereas bigger batteries may result in higher vehicle weight and oversizing of the energy storage system to meet just one requirement.

In particular, by providing a system having an electrically powered compressor disposed in the recirculation hydrogen fuel system, it becomes possible to improve the capabilities of the vehicle to absorb some amount of energy (kinetic energy is converted to electrical energy) and power during the breaking demand, such as during a braking event or in the preparations of an upcoming braking event. Such excessive energy may thus be used to power the compressor for pressurizing the hydrogen fuel in the recirculation hydrogen fuel system. That is, excessive electrical energy is used to power the compressor, thereby increasing the overall efficiency of the energy management of the vehicle.

Accordingly, another technical advantage may include to improve safety by ensuring that the vehicle will have sufficient braking capacity available due to the added braking power provided by the proposed system.

The term "braking demand" typically refers to an energy dissipation situation where there is a need for managing excessive energy generated due a predicted or prevailing braking operation. Hence, the term "braking demand" may refer to any one of a current braking demand and a predicted braking demand.

The proposed system may also allow for recuperating energy more effectively without oversizing the battery/energy storage system of the vehicle. Excessive energy may typically be generated by operating an electric traction machine of the vehicle in a generator mode for generating electrical energy during the regenerative braking event of the vehicle. A conventional electric machine may be operable both in a traction mode and in a generator mode.

Optionally, in some examples, including in at least one preferred example, the electrically powered compressor may be arranged to operate from recuperation of brake energy from the braking event. As such, the electrically powered compressor is arranged to absorb energy generated from the braking event.

The electrically powered compressor may be provided in several different configurations. Typically, the electrically powered compressor may be an electrically operated compressor. By way of example, the electrically powered compressor is drivingly connected to an electric motor. The compressor is thus powered by the electric motor. The electric motor is operable from any source of electrical energy, including recuperated energy from braking, i.e. produced power from the regenerative braking, electrical energy from a battery system and electrical energy from a fuel cell system and/or from one or more fuel cells. In addition, or alternatively, the electrically powered compressor may be configured to operate in any type of driving situation, even when the vehicle is not braking.

The need for energy dissipation may be determined by calculating excessive electrical energy, which can e.g. be derivable by determining the sum between predicted electrical energy consumption and predicted energy production over a given period of time. The need for dissipating energy due to the braking demand of the vehicle can be determined or estimated in several different manners.

Typically, although strictly not required, the provision of determining an amount of possible excessive energy from the braking event of the vehicle is determined during a regenerative braking event. However, it may also be possible to predict possible excessive energy from an up-coming braking event of the vehicle in beforehand based on one or more operational parameters, as mentioned herein. In this manner, the control system allows for estimating the need for dissipating energy in view of how much energy that can or will be regenerated.

Optionally, in some examples, including in at least one preferred example, the system may further comprise an electric powertrain system configured to provide power to the vehicle and further controllable as an electrical energy dissipating system for powering the electrically powered compressor in response to the determined need for dissipating energy. A technical benefit may include improved energy efficiency and enhanced power management. Such configuration enables the utilization of excess electrical energy of the electric powertrain system for pressurizing hydrogen fuel, thus enhancing the overall energy utilization within the vehicle.

Optionally, in some examples, including in at least one preferred example, the electric powertrain system may comprise an electric machine. The electric machine may be operable in a generator mode. A technical benefit may include the provision of a highly efficient and responsive system to convert electrical energy into mechanical power for the vehicle, and vice versa. By way of example, the electric machine is a traction electric machine.

Optionally, in some examples, including in at least one preferred example, the hydrogen fuel storage system may be controllable to supply hydrogen fuel at a low-pressure level to the recirculation hydrogen fuel system, and the electrically powered compressor is controllable to pressurize hydrogen fuel in the recirculation hydrogen fuel system, so as to return hydrogen fuel of high pressure to the hydrogen fuel storage system. A technical benefit may include enhanced control over the pressure levels of the hydrogen fuel, enabling a more efficient fuel storage system. Such configuration may also allow for a more adaptive management of hydrogen fuel flow and pressure, catering to varying power demands while further enhancing, or at least maintaining the energy efficiency and operational performance of the vehicle.

Optionally, in some examples, including in at least one preferred example, the system may further comprise a cooler configured to be in fluid communication with the recirculation hydrogen fuel system, and further configured to regulate a temperature of the hydrogen fuel in the recirculation hydrogen fuel system. A technical benefit may include improved safety and performance through temperature regulation. By maintaining the hydrogen fuel within certain temperature ranges, the system can prevent overheating and ensure consistent fuel efficiency and performance, especially under varying operational conditions.

Optionally, in some examples, including in at least one preferred example, the system may further comprise a controller configured to determine the need for dissipating energy responsive to a braking demand of the vehicle. A technical benefit may include enhanced energy recovery and utilization, particularly during braking events. Determining energy dissipation needs based on braking demand may allow for more effective regenerative braking, capturing kinetic energy that would otherwise be lost and using the energy to supplement the energy needs of the vehicle.

Optionally, in some examples, including in at least one preferred example, the controller may be configured to determine the braking demand by determining an amount of possible energy from a regenerative braking event of the vehicle. A technical benefit may include maximized, or at least increased energy recovery from regenerative braking. By assessing the potential energy recovery from braking events, the system can further improve the compression and storage of hydrogen fuel, further enhancing the overall energy efficiency and potentially extending the driving range.

Optionally, in some examples, including in at least one preferred example, the controller may be configured to determine the need for dissipating energy using route topography data. Route topography data is topography data of the intended route. A technical benefit may include providing predictive energy management. Utilizing route topography data allows the system to proactively adjust the energy management in the system based on upcoming road conditions, such as inclines or declines. Such configuration may further improve energy usage and recovery for enhanced efficiency and performance throughout the journey.

Optionally, in some examples, including in at least one preferred example, the controller may be configured to control the compressor in response to data indicative of a load on the hydrogen fuel-consuming power source.

Optionally, in some examples, including in at least one preferred example, the hydrogen fuel-consuming power source may be any one of a fuel cell system and an internal combustion engine system. For vehicles equipped with a fuel cell system, the system may contribute to even more efficient conversion of hydrogen into electricity, providing clean energy for electric powertrains with high efficiency and low emissions. In vehicles with an internal combustion engine system operable on hydrogen, the system may allow for a more traditional power generation method while still leveraging the environmental benefits of hydrogen fuel.

According to a second aspect of the disclosure, there is provided a vehicle comprising the system according to the first aspect.

According to a third aspect of the disclosure, there is provided a computer-implemented method for controlling a system of a vehicle, the system comprising a hydrogen fuel storage system for storing hydrogen fuel; a recirculation hydrogen fuel system for transporting hydrogen fuel, the recirculation hydrogen fuel system having a fuel inlet configured to be in fluid communication with the hydrogen fuel storage system and further a fuel return line to the hydrogen fuel storage system, wherein the recirculation hydrogen fuel system is configured to be in fluid communication with a hydrogen fuel-consuming power source, the system further comprising an electrically powered compressor disposed in the recirculation hydrogen fuel system; and wherein the electrically powered compressor is controllable to pressurize hydrogen fuel in the recirculation hydrogen fuel system, the method comprising: determining, by processing circuitry of a computer system, a need for dissipating energy from the system; and in response to the determined need for dissipating energy, controlling, by the processing circuitry, the electrically powered compressor to pressurize hydrogen fuel in the recirculation hydrogen fuel system.

The third aspect of the disclosure may seek to improve the management of excessive energy generated during operation of the vehicle, e.g. due to a braking demand for the vehicle, during a stand-still operation of the vehicle with the fuel cells active and/or during any other operations of the vehicle where the fuel cells produce more electrical energy than can be used by, or stored in, one or more components of the electric systems of the vehicle.

A technical benefit may include providing an enhanced efficiency and flexibility in managing the need for dissipating energy, in which the system can dynamically adjust the operation of the compressor dependent on the need for dissipating excessive energy, while providing adequate pressurizing of the hydrogen fuel for the hydrogen fuel storage tank. This capability may thus further allow for a more effective utilization of hydrogen fuel, reducing waste and improving the overall energy efficiency of the vehicle.

Optionally, in some examples, including in at least one preferred example, the method may further comprise determining the need for dissipating energy responsive to a braking demand of the vehicle.

According to a fourth aspect of the disclosure, there is provided a computer program product comprising program code for performing, when executed by the processing circuitry, the method of the third aspect.

According to a fifth aspect of the disclosure, there is provided a non-transitory computer-readable storage medium comprising instructions, which when executed by the processing circuitry, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits and/or technical improvements.

### BRIEF DESCRIPTION OF THE DRAWINGS

Examples are described in more detail below with reference to the appended drawings.
**FIG. 1** illustrates an exemplary view of a vehicle, comprising a system according to an example.
**FIG. 2** illustrates an exemplary view of a system according to an example.
**FIG. 3** illustrates an exemplary view of a system according to an example.
**FIG. 4** illustrates an exemplary view of a system according to an example.
**FIG. 5** is a flow chart of an exemplary method to control a system of a vehicle according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure is at least partly based on the realization that existing methods for dissipating excess electrical energy generated by regenerative braking in vehicles comprising fuel cells, especially heavy-duty vehicles, may face limitations. These limitations may become particularly evident when the storage capabilities of the battery system of the vehicle are fully utilized, rendering conventional energy dissipation methods, such as conversion to heat through resistors or auxiliary load operation, less effective or impractical.

For these and other reasons, there is still a need for improving the management of regenerative braking energy in vehicles, such as heavy-duty vehicles comprising fuel cell system(s). The challenges include finding efficient ways to handle excess energy when the battery system is at full charge and ensuring that the braking performance and overall operational efficiency are not compromised.

To remedy this, the present disclosure provides systems and methods that introduce an alternative approach for the dissipation of excess regenerative braking energy. This approach leverages the hydrogen fuel storage and supply system to absorb and then reuse the electrical energy generated during braking of the vehicle. Specifically, the systems and methods typically involve releasing hydrogen gas from a high-pressure storage system into a lower-pressure recirculation hydrogen fuel system and subsequently re-compressing the hydrogen fuel into the storage system using an electric powered compressor.

As such, the proposed system and method may seek to improve the management of excessive energy generated during operation of the vehicle, e.g. due to a braking demand for the vehicle, during a stand-still operation of the vehicle with the fuel cells active and/or during any other operations of the vehicle where the fuel cells produce more electrical energy than can be used by, or stored in, one or more components of the electric systems of the vehicle. More specifically, the proposed system may seek to provide an efficient and versatile way of managing excessive energy generated during operation of the vehicle by controlling a compressor disposed in the hydrogen fuel storage and supply system in response to a need for managing generated excessive energy. Managing excessive electrical energy derived from regenerative braking, may be particularly useful in situations where conventional energy storage or dissipation methods are not viable due to battery capacity constraints or other limitations.

A technical benefit of the proposed system and method includes the enhanced efficiency and flexibility in managing the need for dissipating energy, in which the system can dynamically adjust the operation of the compressor dependent on the need for dissipating excessive energy, while providing adequate pressurizing of the hydrogen fuel for the hydrogen fuel storage tank. This capability may thus further allow for a more effective utilization of hydrogen fuel, reducing waste and improving the overall energy efficiency of the vehicle.

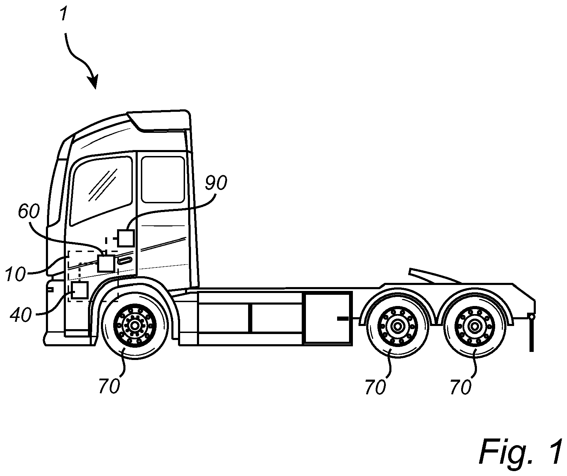

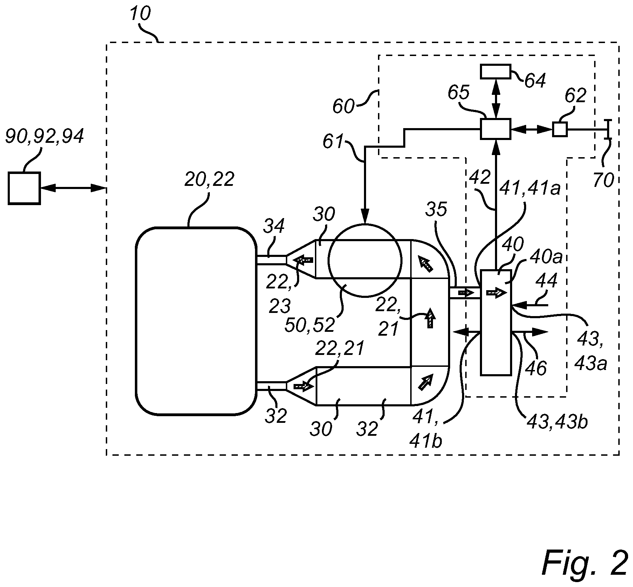

One example of such system and vehicle will now be described in relation to the example in FIG. 1, in combination with FIGS. 2 to 6.

In FIG. 1, there is illustrated one example of a vehicle 1. The vehicle 1 is here a heavy-duty vehicle, such as a truck. The vehicle 1 comprises a powertrain system. The powertrain system here comprises a battery system and a fuel cell system. As such, the powertrain system is an electric powertrain system 60. Accordingly, the vehicle 1 comprises the electric powertrain system 60. The vehicle 1 is considered a fully electrical vehicle. As the vehicle 1 comprises the fuel cell system, the vehicle may also be denoted as a fuel cell electric vehicle (FCEV). The fuel cell system is one example of a hydrogen fuel-consuming power source 40. In other examples, the hydrogen fuel-consuming power source 40 is an internal combustion engine system operable on hydrogen fuel. Accordingly, the vehicle 1 may in some examples also be provided in the form of a vehicle comprising a hydrogen internal combustion engine system.

The vehicle 1 may, however, be of any type of vehicle suitable for transporting people and/or goods, such as bulk material from one location to another. For example, the vehicle may be an excavator, loader, articulated hauler, dump truck, truck or any other suitable vehicle known in the art. In some examples, the vehicle 1 may be driven by an operator. In other examples, the vehicle 1 may be an autonomous vehicle that is controlled by a vehicle motion management (VMM) unit configured to individually control vehicle units and/or vehicle axles and/or wheels of the vehicle. For ease of reference, the following description refers to a vehicle 1 in the form of a truck.

The electric powertrain system 60 is configured to provide traction power for the vehicle 1. The traction power is delivered to one or more ground engaging members 70, e.g. one or more wheels of the vehicle 1, by any one of the battery system and the fuel cell system in cooperation with one or more electric machines.

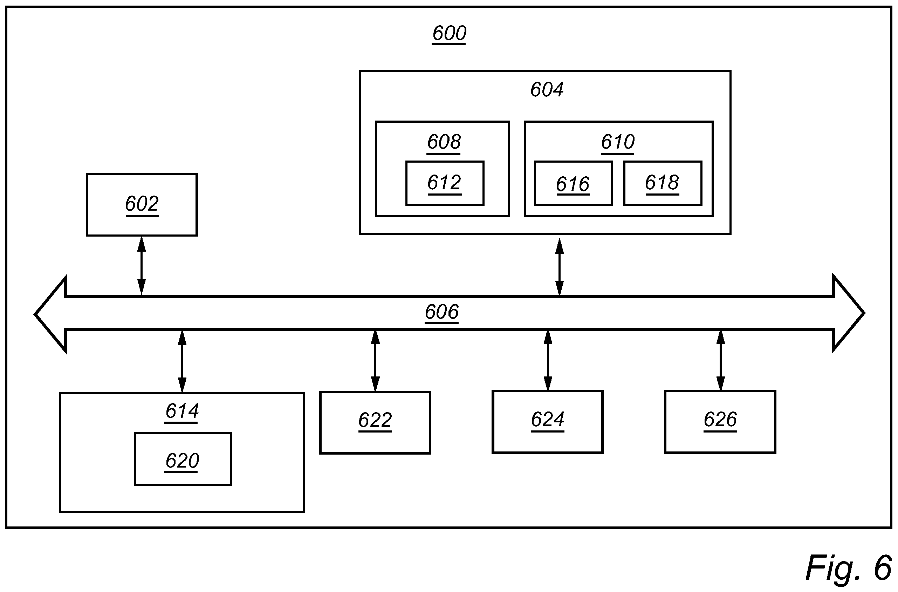

As depicted in FIG. 1, the vehicle 1 comprises a system 10. In this example, the system 10 comprises the hydrogen fuel-consuming power source 40 and the electric powertrain system 60. In addition, the system 10 typically comprises a controller 90. As such, the vehicle 1 comprises the controller 90. In other examples, the controller 90 is an external controller 90 arranged remotely from the vehicle 1. The controller 90 is configured to control various operations and functionalities of the vehicle and the system, as will also be described in further detail below. The controller 90 may be an integral part of a computer system. The components and further optional technical details of the controller 90 and the computer system are described in relation to FIG. 6.

In order to describe the system 10 in more detail, reference is made to FIG. 2 which is a schematic illustration of a system according to an example.

As illustrated in FIG. 2, the system 10 comprises the hydrogen fuel-consuming power source 40. In FIG. 2, the hydrogen fuel-consuming power source 40 is a fuel cell system 40a. The fuel cell system 40a here comprises one or more fuel cell stacks arranged to generate electricity to propel the vehicle 1 and to power auxiliary equipment. Each one of the fuel cell stacks comprises a plurality of fuel cells (not shown). Each one of the fuel cell stacks generally comprises a high number of fuel cells, e.g. 100-300 fuel cells connected in series. The fuel cell system 40a may thus comprise a number of fuel cell stacks having a number of fuel cells, respectively. In other examples, the fuel cell system 40a comprises a single fuel cell stack with a number of fuel cells. While there are several different types of fuel cells, distinguished mainly by the type of electrolyte used, a so-called Proton Exchange Membrane (PEM) fuel cell is particularly suitable for use in heavy-duty vehicles, such as the vehicle 1 in FIG. 1.

The fuel cell system 40a may also comprise additional components as well as a so-called balance of plant system. The balance of plant refers to and encompasses typically all components of the fuel cell system 40a except the fuel cell stack itself.

The fuel cell system 40a is configured to convert chemical energy from hydrogen fuel into electrical energy through an electrochemical reaction with oxygen from the air, with water being the primary byproduct. As such, as depicted in FIG. 2, the fuel cell system 40a comprises an anode side 41 (hydrogen side) and a cathode side (oxygen side) 43.

The anode side 41 has a hydrogen inlet 41a and hydrogen outlet 41b. In FIG. 2, the fuel cell system 40a comprises the hydrogen inlet 41a. The hydrogen inlet 41a is fluidly connected to a fuel supply line 35 for receiving hydrogen gas (fuel). In FIG. 2, the fuel cell system 40a also comprises the hydrogen outlet 41b. The hydrogen outlet 41b is configured to permit unused hydrogen and byproducts (mainly water vapor) to exit the fuel cell system 40a.

The cathode side 43 comprises an air inlet 43a and an air outlet 43b. In FIG. 2, the fuel cell system 40a comprises the air inlet 43a. The air inlet 43a is configured to receive ambient air (or oxygen-enriched air), thus allowing air to enter the fuel cell(s) of the fuel cell system 40a. The air inlet 43a is here fluidly connected to an air supply system 44, such as a compressed air system. The air inlet 43a is fluidly connected to the air supply system 44 via an air inlet conduit. The compressed air system may include a filter to remove particulates, a humidifier, a compressor and other suitable components as are commonly used at the cathode side 43 of fuel cell systems. The air supply system 44 is further in fluid communication with the ambient environment for receiving fresh air.

In FIG. 2, the fuel cell system 40a also comprises the air outlet 43b. The air outlet 43b is configured to permit air to exit the fuel cell system 40a. More specifically, after participating in the electrochemical reaction at the cathode, the spent air, now depleted in oxygen and enriched in water vapor (and possibly CO₂ in direct carbon fuel cells), exits the fuel cell system 40a via the air outlet 43b. The air outlet 43b also serves to remove excess water produced in the reaction, helping to manage the humidity within the fuel cell(s) of the fuel cell system 40a. The air outlet 43b is typically fluidly connected to an outlet conduit 46. Hereby, exhaust flow is supplied from the air outlet 43b of the fuel cell system 40a and into the outlet conduit 46 forming an exhaust manifold.

In addition, the fuel cell system 40a typically comprises an electric power output 42 (see FIG. 2). The electric power output 42 may comprise a positive electric terminal and a negative electric terminal. The positive electric terminal is the positive output of the electrical energy generated by the fuel cell system 40a. The positive electric terminal is connected to the electrical system of the vehicle 1, including the components making up the electric powertrain system 60, as also shown in FIG. 2. The positive electric terminal may also be configured to connect to an external circuit to supply power. The negative electric terminal completes the electrical circuit. Together with the positive electric terminal, the negative electric terminal allows for the flow of electrons generated from the electrochemical reaction within the fuel cell(s) of the fuel cell system to e.g. external circuits.

Although not illustrated, the fuel cell system 40a typically also comprises a coolant system. The coolant system is arranged and configured to manage the operating temperature of the fuel cell(s) of the fuel cell system 40a. Hence, the fuel cell system 40a typically comprises a coolant inlet and a coolant outlet. A coolant (often water or a water-glycol mixture) is circulated through channels within the fuel cell system 40a. Hence, the coolant inlet is configured to receive coolant from the coolant system. The coolant outlet is configured to permit warmed coolant to exit the fuel cell system 40a, and optionally direct the warmed coolant to a radiator or the like for cooling of the coolant. The coolant is typically recirculated back into the fuel cell system 40a.

To sum up, the fuel cell system 40a comprises a hydrogen fuel storage and supply system for supplying hydrogen to the anode side 41 of the fuel cell system 40a, an air supply system 44 for supplying air to the cathode side 43 of the fuel cell system 40a, as well as the electric power output 42 from the fuel cell system 40a to a battery system 64 and/or an electrical machine 62, as depicted in FIG. 2.

In FIG. 2, the fuel cell system 40a is schematically illustrated with a particular view of the anode side and the components connected to the electric power output 42. The cathode side and cooling system are partly omitted for simplifying the illustration. Other components such as balance of plant components could also be included in the fuel cell system as are commonly used in the field of fuel cell system.

As depicted in FIG. 2, the system 10 comprises a hydrogen fuel storage system 20 for storing the hydrogen fuel 22. The hydrogen fuel storage system 20 is configured to store high-pressure hydrogen fuel. In the context of the disclosure, high-pressure hydrogen fuel may refer to a pressure of about 700 bar, while low-pressure hydrogen fuel may refer to a pressure of about 11 bar. By way of example, the hydrogen fuel storage system 20 comprises one or more tanks having a volume for storing hydrogen fuel 22.

The system 10 further comprises a recirculation hydrogen fuel system 30. The recirculation hydrogen fuel system 30 is configured for transporting hydrogen fuel. The recirculation hydrogen fuel system 30 and the hydrogen fuel storage system 20 may collectively form the hydrogen fuel storage and supply system of the system 10. The recirculation hydrogen fuel system 30 comprises a fuel inlet 32 configured to be in fluid communication with the hydrogen fuel storage system 20. The fuel inlet 32 fluidly connects the recirculation hydrogen fuel system 30 to the hydrogen fuel storage system 20.

In addition, the recirculation hydrogen fuel system 30 comprises a fuel return line 34 to the hydrogen fuel storage system 20. The fuel return line 34 fluidly connects the recirculation hydrogen fuel system 30 to the hydrogen fuel storage system 20.

By way of example, the hydrogen fuel storage system 20 is controllable to supply hydrogen fuel 22 at a low-pressure level to the recirculation hydrogen fuel system 30. Thus, by way of example, the hydrogen fuel from the hydrogen fuel storage system 20 is decompressed to an appropriate level, such as e.g. 11 bar. The supply of hydrogen fuel 22 from the hydrogen fuel storage system 20 to the recirculation hydrogen fuel system 30 is controlled by the controller 90. The control of the supply of hydrogen fuel 22 from the hydrogen fuel storage system 20 to the recirculation hydrogen fuel system 30 may include controlling one or more flow control valves (not illustrated) arranged in the system 10.

The recirculation hydrogen fuel system 30 is configured to be in fluid communication with the hydrogen fuel-consuming power source 40, such as the fuel cell system 40a in FIG. 2. In FIG. 2, the recirculation hydrogen fuel system 30 comprises the fuel supply line 35. The fuel supply line 35 is fluidly connected to the hydrogen inlet 41a of the anode side 41. The recirculation hydrogen fuel system 30 is thus in fluid communication with the fuel cell system 40a via the fuel supply line 35. As such, hydrogen fuel 22 from the hydrogen fuel storage system 20 is allowed to flow through the recirculation hydrogen fuel system 30 and to the fuel cell system 40a. The fuel cell(s) of the fuel cell system 40a thus receives hydrogen gas via the fuel supply line 35 to be used as a fuel component in the fuel cell system 40a.

The supply of hydrogen fuel 22 from the recirculation hydrogen fuel system 30 to the fuel cell system 40a is typically automatically controlled based on the operation of the fuel cell system 40a. For example, the supply of hydrogen fuel 22 from the recirculation hydrogen fuel system 30 to the fuel cell system 40a is controlled based on the load and demand on the fuel cell system 40a from the vehicle 1, which is typically controlled by the controller 90.

In FIG. 2, the system 10 further comprises an electrically powered compressor 50. For ease of reference, the electrically powered compressor may be denoted as the compressor 50. The compressor 50 is disposed in the recirculation hydrogen fuel system 30. The compressor 50 is operated by an electric motor 52. Hence, the system 10 comprises the electric motor 52. As further described herein, the compressor 50 is drivingly connected to the electric motor 52, and further operable from any source of electrical energy. The electric motor 52 is typically an integral part of the compressor 50. The electric motor 52 may likewise be a separate component in electrical connection with the compressor 50.

In FIG. 2, the compressor 50 is arranged in-between the fuel supply line 35 and the fuel return line 34. Accordingly, the compressor 50 is arranged downstream the fuel supply line 35. The compressor 50 is thus also arranged upstream the fuel return line 34.

The compressor 50 is controllable to pressurize hydrogen fuel 22 in the recirculation hydrogen fuel system 30. In this manner, the compressor 50 pressurizes the hydrogen fuel 22 in the recirculation hydrogen fuel system 30 so as to return hydrogen fuel of high pressure to the hydrogen fuel storage system 20. The circulation of hydrogen fuel 22 in the recirculation hydrogen fuel system 30 is indicated by arrows in FIG. 2, in which arrow 21 indicates low-pressure hydrogen fuel and arrow 23 indicates high-pressure hydrogen fuel.

In this example, the compressor 50 is controllable to pressurize hydrogen fuel 22 in the recirculation hydrogen fuel system 30 in response to a determined need for dissipating energy. As will be further described herein, the compressor 50 is controllable to pressurize hydrogen fuel 22 in the recirculation hydrogen fuel system 30 in response to a determined need for dissipating excessive energy caused by regenerative braking and typically from excessive energy transferred from the electric powertrain system 60 through a junction unit 65.

In FIG. 2, the electric power output 42 from the fuel cell system 40a is electrically connected to the junction unit 65, The junction unit 65 is here an integral part of the electric powertrain system 60.

Typically, the fuel cell system 40a is an integral part of the electric powertrain system 60. In other systems, the fuel cell system 40a may be a separate part of the system 10, which is electrically connected to the electric powertrain system 60.

The electric powertrain system 60 here also comprises at least one electric machine 62. Electric machines 62 are responsible for converting electrical energy from the battery system or fuel cell system 40a into mechanical power to drive the wheels 70. The electric machine 62 is thus configured to provide traction power to the vehicle 1. The electric machine 62 is configured to be connected to the battery system 64 and the fuel cell system 40a.

Accordingly, the electric powertrain system 60 here also comprises the battery system 64. By way of example, the battery system 64 is comprised of high-energy-density lithium-ion battery cells, designed to store electrical energy efficiently.

In FIG. 2, the battery system 64 is electrically connected via the junction unit 65 to the electrical machine 62, while the fuel cell system 40a is configured to supply energy to the electrical machine 62 and/or delivers power to the battery system 64 via the junction unit 65. As such, the junction unit 65 box serves as a central point for distributing electrical power from the fuel cell system 40a, the battery system 64 and potentially other energy sources (like regenerative braking systems) to the electric machine 62 and other electrical loads in the vehicle, such as lighting, infotainment systems, and climate control. To this end, the junction unit 65 is arranged and configured to control the distribution of electrical power.

In particular, the junction unit 65 is arranged and configured to route the electrical power generated during vehicle braking back to the battery system 64 for storage or directly to the electric machine 62 for immediate use of the electric powertrain system 60. In this example, the junction unit 65 is also arranged and configured to route excessive electrical energy (or electrical power) to the compressor 50. Hence, the system 10 here comprises an electrical connection 61 from the junction unit 65 to the compressor 50, as illustrated in FIG. 2. The transfer of electrical energy typically passes through a DC/DC converter, as is commonly known in the field of fuel cell electric vehicles.

It should be noted that the electric powertrain system 60 may be provided with a plurality of electric machines 62. Hence, the electric powertrains system 60 may comprise one or more electric machines 62. Each one of the electric machines 62 is configured to be connected to the battery system 64 and the fuel cell system 40a, either individually connected or collectively connected.

Put it differently, the fuel cell system 40a together with the battery system 64 and the electric machine 62 form parts of the electric powertrain system 60 for providing traction power to the vehicle 1. The electric machine 62 is a traction motor for providing traction power to the vehicle 1, i.e. for propelling the wheels 70 of the vehicle 1. The fuel cell system 40a is connected to the electrical machine 62 to provide power to the electrical machine 62, thereby the electrical machine 62 can provide traction power to the wheels 70. The electric machine may generally include a conventional electric motor.

In a similar vein, the battery system 64 is electrically connected to the electrical machine 62 to provide power to the electrical machine 62.

The battery system 64 and the fuel cell system 40a can be arranged in parallel, whereby each one of the battery system 64 and the fuel cell system 40a are connected to the electric machine 62. The battery system 64 and the fuel cell system 40a may likewise be arranged in series, whereby the battery system 64 and the fuel cell system 40a are connected to the electric machine 62 in a slightly different way.

The junction unit 65 is here configured to connect the fuel cell system 40a to the battery system 64 and the traction electric machine 62. Traction power to the wheels 70 is delivered by any one of the battery system 64, electric machine 62 and the fuel cell system 40a. The fuel cell system 40a is electrical connected to the junction unit 65 via an electrical connection from the electrical power output 42. The battery system 64 is connected to the junction unit 65 by a corresponding electrical connection. By way of example, the battery system 64 is connected via the junction unit 65 to the traction electric machine 62 that provides traction power to the vehicle, while the fuel cell system 40a supplies electrical energy to the electric machine 62 and/or delivers power to the battery system 64 via the junction unit 65, as is commonly known in the field of fuel cell electric vehicles.

Although not shown, the electric powertrain system 60 may further comprise additional components as is readily known in the field of electrical propulsion and drive systems, such as a transmission for transmitting a rotational movement from the electric machine(s) 62 to a propulsion shaft, sometimes denoted as the drive shaft. The propulsion shaft connects the transmission to the wheels 70. Some vehicles may use a traditional multispeed transmission, while others employ single-speed transmissions or direct-drive configurations for simplicity and efficiency. Furthermore, although not shown, the electrical machine 62 is typically coupled to the transmission by a clutch.

The electric machine 62 is arranged to receive electric power from any one of the battery system 64 and the fuel cell system 40a. The electric powertrain system 60 typically also comprises one or more DC-DC converters (not shown). The DC/DC converters may interface the fuel cell system 40a and the battery system 64 to a dc bus voltage (DC-link). A DC-DC converter is used to regulate and manage the electrical power between the high-voltage system (battery system or fuel cell system) and the low-voltage system, which powers accessories and the vehicle's electrical subsystems.

The electric powertrain system 60 typically also comprises a DC/AC inverter. The DC/AC inverter is responsible for converting the direct current (DC) power from the battery system 64 or fuel cell system 40a into alternating current (AC) power required by the electric machine(s) 62. The DC/AC inverter is configured to control the speed and torque of the electric machine(s) 62, contributing to overall vehicle performance and efficiency.

Turning now to the operation of the compressor 50 in response to the determined need for dissipating energy from the system 10, such as from the electric powertrain system 60. By way of example, the controller 90 is configured to determine the need for dissipating energy responsive to a braking demand of the vehicle 1. As such, the controller 90 is configured to determine the braking demand by determining an amount of possible energy from a regenerative braking event of the vehicle 1.

By way of example, the compressor 50 is controllable to pressurize hydrogen fuel 22 in the recirculation hydrogen fuel system 30 in response to a control signal containing data indicative of a need for dissipating energy due to the braking demand of the vehicle 1.

Moreover, in this example, the controller 90 is configured to determine the need for dissipating energy using topography data of the route.

The controller 90 is here also configured to control the compressor 50 in response to data indicative of a load on the fuel cell system 40a.

As further illustrated, the controller 90 comprises processing circuitry 92. The processing circuitry 92 is configured to control the system 10 to control the energy dissipation.

In FIG. 2, the controller also comprises a memory 94 and a system bus (although not shown). These components and further optional technical details of the controller 90 are described in relation to FIG. 6.

The compressor 50 is powered by the electric motor 52 which receives electric power from one or more electrical energy sources, such as the battery system 64, the traction electric machine 62 and the fuel cell system 40a. As such, the compressor 50 is in electrical connection with the battery system 64, the traction electric machine 62 and the fuel cell system 40a. In FIG. 2, the compressor 50 is in electrical connection with the battery system 64, the traction electric machine 62 and the fuel cell system 40a via the junction unit 65.

The compressor 50 is arranged to receive hydrogen fuel 22, typically of low pressure (low-pressure hydrogen fuel 21), and pressurize the low-pressure hydrogen fuel 21 to high-pressure hydrogen fuel 23. The low-pressure hydrogen fuel 21 is supplied to the compressor 50 via the fuel inlet 32, as illustrated in FIG. 2. The pressurized hydrogen fuel of high pressure (high-pressure hydrogen fuel 23) is subsequently supplied through the fuel return line 34 to the hydrogen fuel storage system 20, in which the hydrogen fuel 22 is stored.

During operation of the vehicle 1, i.e. when the traction electric machine 62 operates as a generator to control the vehicle speed, i.e. the vehicle 1 operates in the regenerative braking mode, electric power is transmitted from the traction electric machine 62 to the battery system 64. If the battery system 64 is not able to receive all, or parts of the electric power generated by the traction electric machine 62, for example because of a current electric charging capacity, i.e. the level of electric power the battery is able to receive until being fully charged or has reached its maximum allowed state of charge level, the excess electric power should preferably be dissipated. In the present case, the battery system 64 is controlled, e.g. by the controller 90, to supply electric power to the electric motor 52 of the system. In addition, or alternatively, the traction electric machine 62 operating in its generator mode to generate electrical energy may directly supply electrical energy to the electric motor 52 that is operating to power, and thus move, the compressor 50 so as to pressurize the hydrogen fuel 22. As such, the compressor 50 is electrically operated by the corresponding electric motor 52, which is connected to the junction unit 65 so as to receive power from any one of the battery system 64, the traction electric machine 62, and the fuel cells of the fuel cell system 40a. Accordingly, the system 10 comprises the electric powertrain system 60 configured to provide power to the vehicle 1 and which is here also controllable as an electrical energy dissipating system for powering the electrically powered compressor 50 in response to the determined need for dissipating energy.

By way of example, the electric motor 52 is, by the received electric power, rotating a shaft of the compressor 50 so as to operate the compressor. The connection between the electrically operable compressor 50 and the electric motor 52 is thus mechanical, i.e. an output shaft of the electric motor 52 is coupled to the compressor 50. The compressor 50 in turn pressurizes low-pressure hydrogen fuel 21 and supplies the high-pressure hydrogen fuel 23 further through the fuel return line 34 to the hydrogen fuel storage system 20.

FIG. 2 further illustrates one example of electrically connecting the electric motor 52 of the compressor 50 to the electrical energy sources by the junction unit 65. As such, the compressor 50 is in electrical connection with the battery system 64, the traction electric machine 62 and the fuel cell system 40a via the junction unit 65. In particular, the compressor 50 is in electrical connection with the junction unit 65 via the electrical connection 61, as depicted in FIG. 2.

The controller 90 is in communication with the compressor 50, the battery system 64, the traction electric machine 62, the fuel cell system 40a and the junction unit 65. As such, the controller 90 is in communication with the electric powertrain system 60.

Moreover, as mentioned above, the controller 90 is configured to operate the compressor 50 responsive to a need for dissipating electrical energy from the vehicle 1. In addition, the controller 90 is configured to control the flow of electrical energy from the electric powertrain system 60 to the compressor 50 responsive to the need for dissipating electrical energy. In this manner, the controller 90 is configured to operate the electric powertrain system 60 as an electrical energy dissipating system for powering the electrically powered compressor 50 in response to the determined need for dissipating energy.

A number of examples of when there may be a need for dissipating energy from the vehicle will hereinafter be described.

By way of example, the controller 90 is configured to operate the compressor 50 responsive to a need for dissipating electrical energy from the vehicle 1 in response to a control signal containing data indicative of a need for dissipating electrical energy due to a braking demand of the vehicle 1.

In this manner, the controller 90 is configured to be used as a braking energy management system. As described herein, the braking demand amounts to an energy dissipation situation where there is a need for managing excessive energy generated. Such excessive energy may occasionally be generated due to a predicted or prevailing braking operation.

The control signal is generally received at the controller 90. Hence, the controller 90 is configured to receive one or more control signals containing data indicative of at least a braking demand of the vehicle 1. In response to the received one or more control signals, the controller 90 is configured to operate the compressor 50, as described further herein. The other components of the system 10 may also be at least partly operated on the basis of the one or more control signals, as described herein.

The controller 90 may also be configured to control the compressor 50 in response to one or more control signals further containing data indicative of a fuel cell system load. The data indicating the fuel cell system load is generally a measure of the current fuel cell system load. In other situations, the data indicating the fuel cell system load is a measure of a predicted fuel cell system load. As such, the controller 90 here controls the compressor 50 in response to data indicative of the load on the fuel cell system 40a.

In addition, or alternatively, the controller 90 is configured to control the compressor 50 in response to a determined need for dissipating energy when the traction electric machine 62 operates in a traction mode and there is a determined surplus of electrical energy. Such situation may e.g. occur when there is a desire not to shut-off the fuel cell(s) or a desire not to reduce the power output from the fuel cell(s) due to a predicted power demand on the fuel cell(s) for operating the vehicle 1. In the latter situation, such reduction of the power output from the fuel cell(s) may have a negative impact on the fuel cell(s).

In addition, or alternatively, the controller 90 is configured to control the compressor 50 in response to a determined need for dissipating energy when the traction electric machine 62 is in a non-operative mode and the vehicle 1 is at stand-still. Such situation may e.g. occur when the vehicle 1 is controlled into the stand-still operation while the SOC of the battery system 64 is high. In this context, the term "non-operative mode" of the traction mode means a mode of the traction electric machine 62 where there is no ongoing conversion of energy. In this context, the term "stand-still of the vehicle" refers to an operating situation of the vehicle 1 where there is no traction power (from any energy source) provided to the wheels 70 of the vehicle 1.

In addition, or alternatively, the controller 90 is configured to control the compressor 50 in response to a determined need for dissipating energy when the electric machine 62 is in a non-operative mode, the vehicle 1 is at stand-still and with the fuel cell(s) operating in an active state for producing electrical energy. Such situation may e.g. occur when the vehicle 1 is controlled into the stand-still operation while the SOC of the battery system 64 is high. Moreover, during stand-still of the vehicle 1, it may also be a desire to dissipate electrical energy in a situation where the vehicle 1 is equipped with an electric power take-off, ePTO, system and there is a desire to operate the ePTO with a low power output by means of the fuel cell(s), but the power level of the fuel cell(s) exceeds the required power for powering the ePTO and the SOC of the battery system 64 is high. In such situation, it may not be desired to shut-off the fuel cell(s) completely, e.g. if the ePTO is only predicted to be operated for a short period of time until the vehicle is to be reset in a driving mode.

The need for dissipating excessive energy from the vehicle 1 can be determined or estimated in several different manners. In one example, the need for energy dissipation is determined by calculating excessive electrical energy, which can e.g. be derivable by determining the sum between predicted electrical energy consumption and predicted energy production over a given period of time. By way of example, the controller 90 is configured to determine the need for dissipating electrical energy by determining the sum of a power level of the traction electric machine 62, a power level of the fuel cell(s), a power level of the battery system 64. Optionally, the controller 90 also includes any power demand from one or more auxiliaries (such as pumps and fans) and any power losses in the system / vehicle. It should be noted that traction electric machine power can be negative or positive depending on whether the electric machine operates in its regenerative mode (generator mode) or traction mode. It may also be noted that the battery system power level can be limited due to a high SOC. The battery system power level can also be limited due to temperature or other.

Typically, the controller 90 is configured to determine the excessive electrical energy by means of any one of an algorithm stored in the memory 94 of the controller 90, a look-up table stored in the memory 94, including data of current and/or expected electrical energy consumptions by, or in, the vehicle 1, as mentioned above. The controller 90 will then compare the determined sum with e.g. a threshold level indicative of an amount of surplus electrical energy. Hence, if the determined sum is above the threshold level, the controller 90 determines that there is a need for dissipating electrical energy by transferring electrical energy to the electrical motor 52 and the compressor 50. Other options are also conceivable depending on type of vehicle and system.

The need for dissipating excessive energy due to the braking demand of the vehicle 1 can be determined or estimated in several different manners. By way of example, the controller 90 is configured to determine the need for dissipating excessive energy due to the braking demand of the vehicle 1 by determining an amount of possible excessive energy due to the braking demand. Typically, although strictly not required, the provision of determining an amount of possible excessive energy from the braking event of the vehicle 1 is determined during a regenerative braking event. In other situations, the excessive energy is predicted by the controller 90 from an up-coming braking event of the vehicle 1 in beforehand based on one or more operational parameters, as mentioned herein.

The amount of possible excessive energy from the braking event of the vehicle 1 is favorably determined based on one or more operational parameters of the vehicle 1. By way of example, the operational parameter contains any one of the following data: data relating to an upcoming vehicle path, such as a downhill and uphill path; data relating to a change in vehicle speed, data relating to a change in acceleration, data relating to state-of-charge, SOC, of the electrical energy storage system, data relating to state of life of the fuel cell(s), characteristics of the electric machine, data relating to the weight of the vehicle 1, data indicating type of vehicle 1.

By way of example, the amount of possible excessive energy is determined by estimating the total electric energy storage level of the vehicle 1. The total energy level of the vehicle 1 here comprises different sets of data comprising one or more of the operational parameters. By way of example, the total energy level includes data indicating state-of-charge SOC of the battery system 64 and state-of-operation of the fuel cell(s) of the fuel cell system 40a of the vehicle 1. The total energy storage level may also be determined on the basis of the state of life of the battery system 64 and the state of life of the fuel cell(s) of the fuel cell system 40a. In addition, or alternatively, the total energy level may include current energy need for powering auxiliaries of the vehicle 1, such as air conditioning systems and pneumatic devices. In addition, or alternatively, the total energy level may include predicted future energy need of the vehicle 1 for a given time period. Such data can be gathered by various sensors (not shown) and the controller 90, as is commonly known in the art. To this end, the total energy level of the vehicle 1 may correspond to the prevailing SOC of the battery system 64, while also including predictive energy demands for the vehicle 1 for a given time period.

The controller 90 is favorably also configured to deactivate the compressor 50 if the control signal indicates non-braking demand and no fuel cell system load.

It should be noted that in the above description, the various states and loads of the fuel cell system 40a, i.e. the high load, intermediate load, low load and no load, are generally determined by using thresholds levels. Such thresholds level can be predetermined thresholds or dynamically defined thresholds. By way of example, such thresholds levels can be derivable from a look-up table stored in a memory of the controller 90. Typically, the load on the fuel cell system 40a corresponds to a continuous power ramping up or down rather than fixed levels. Other options are also conceivable depending on type of vehicle, system and controller.

As mentioned above, the hydrogen fuel storage system 20 is typically controllable to supply hydrogen fuel 22 at a low-pressure level to the recirculation hydrogen fuel system 30. Moreover, in some examples, the hydrogen fuel storage system 20 is controllable to supply hydrogen fuel 22 at a low-pressure level to the recirculation hydrogen fuel system 30 in response to the determined need for dissipating energy.

The operation of the system 10 may also be described based on the following example. During operation of the vehicle 1, the vehicle 1 occasionally descends a slope under high load conditions and initiates braking to maintain a safe velocity throughout the descent. The vehicle 1 employs regenerative braking, wherein the vehicle's potential energy is initially converted into kinetic energy, which is then transformed into electrical energy through the action of the electric machine 62 functioning as a generator. The generated electrical energy is directed to charge the battery system 64, provided there is available capacity for storage. Should the battery system 64 reach its storage limit and cannot absorb additional electrical energy, the energy dissipation operations (method) as described herein is engaged. In practice, this method could be initiated at the onset of braking or at any point during the braking process.

Hydrogen fuel gas is then released from the hydrogen fuel storage system 20, which contains one or more high-pressure storage tanks (approximately 700 bar), into the recirculation hydrogen fuel system 30 defining a compartment of significantly lower pressure (around 11 bar). The recirculation hydrogen fuel system 30 is provided in the form of a specific pipe system and/or tank system designed for recirculating low-pressure hydrogen fuel.

Moreover, the compressor 50 is controlled by the controller 90, to an active operational state, in which the compressor 50 recompress the hydrogen fuel gas from its low-pressure state back to a high-pressure state (approximately 700 bar or possibly higher), enabling the hydrogen fuel gas to be stored once again in the high-pressure tank.

In one example, the system 10 further incorporates predictive information from a route planning or a navigational system, utilizing topography data in the form of route data, GPS/GNSS data, and map data as input, to determine the timing for activating different braking strategies, including the above examples. This predictive approach allows for the anticipatory activation of the appropriate braking operation based on the current position of the vehicle, the projected path, and expected changes in terrain or traffic conditions. By managing when and how to implement these strategies, the system 10 is configured to enhance the overall energy efficiency and braking performance, ensuring that the regenerative braking energy is utilized effectively and that the hydrogen storage and recompression process is employed at advantageous moments during the journey. As such, the controller 90 here determines the need for dissipating energy using route topography data.

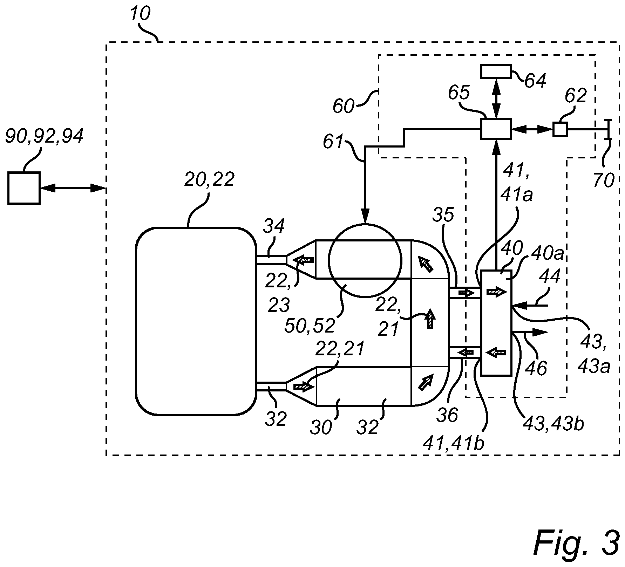

Turning now to Fig. 3, there is provided another example of a system 10. The system 10 typically comprises the components and features as described in relation to FIG. 2.

One difference between the system in FIG. 3 and the system in FIG. 2 is that the hydrogen outlet 41b of the fuel cell system 40a is connected to the recirculation hydrogen fuel system 30. Thus, the recirculation hydrogen fuel system 30 comprises an additional fuel return line 36. The additional fuel return line 36 connects the fuel cell system 40a with the recirculation hydrogen fuel system 30. In this example, the additional fuel return line 36 is located upstream of the fuel inlet line 35. However, the opposite arrangement may likewise be conceivable, in which the additional fuel return line 36 is located downstream of the fuel inlet line 35. The additional fuel return line 36 allows for improving fuel utilization efficiency by feeding unused hydrogen fuel back into the recirculation hydrogen fuel system 30.

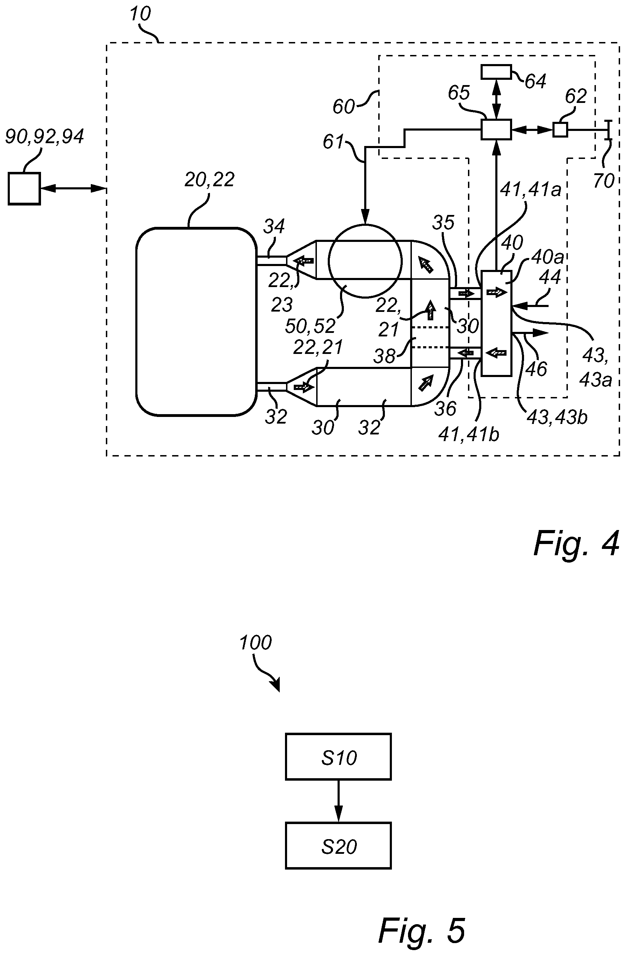

In FIG. 4, there is illustrated another example of the system 10. The system 10 typically comprises the components and features as described in relation to FIG. 2 and/or FIG. 3. In this example of FIG. 4, the system 10 further comprises a cooler 38. The cooler 38 is configured to be in fluid communication with the recirculation hydrogen fuel system 30. The cooler 38 is e.g. a conventional heat exchanger suitable for integration in a fuel cell system. Moreover, the cooler 38 is configured to regulate a temperature of the hydrogen fuel 22 in the recirculation hydrogen fuel system 30. As such, if necessary, the flow of hydrogen fuel gas is cooled through an appropriate heat exchanger system. This could involve integration with the existing cooling system or utilizing an alternative cooling source to ensure the hydrogen fuel gas is at an appropriate temperature for storage.

As described in relation to FIGS. 1 to 4, the hydrogen fuel-consuming power source 40 is typically a fuel cell system 40a. However, in other examples, the hydrogen fuel-consuming power source 40 is an internal combustion engine system. As such, the hydrogen fuel-consuming power source 40 may be any one a fuel cell system and an internal combustion engine system.

FIG. 5 is a flow chart of a method according to an example. More specifically FIG. 5 is an exemplary computer implemented method 100 according to an example. The computer-implemented method 100 is intended for controlling the system 10 of the vehicle 1. As mentioned in relation to FIGS. 1 to 4, the system 10 comprises the hydrogen fuel storage system 20 for storing hydrogen fuel 22 and the recirculation hydrogen fuel system 30 for transporting hydrogen fuel 22. The recirculation hydrogen fuel system 30 comprises the fuel inlet 32 configured to be in fluid communication with the hydrogen fuel storage system 20 and further the fuel return line 34 to the hydrogen fuel storage system 20. The recirculation hydrogen fuel system 30 is configured to be in fluid communication with the hydrogen fuel-consuming power source 40. The system 10 further comprises the electrically powered compressor 50 disposed in the recirculation hydrogen fuel system 30. The electrically powered compressor 50 is controllable to pressurize hydrogen fuel in the recirculation hydrogen fuel system 30.

The method is generally implemented by the processing circuitry 92 of the controller 90. As illustrated in FIG. 5, the computer-implemented method 100 comprises a step of determining S10, by the processing circuitry 92 of controller 90, a need for dissipating energy from the system 10. Further, the computer-implemented method 100 comprises a step of controlling S20, by the processing circuitry 92, the electrically powered compressor 50 to pressurize hydrogen fuel in the recirculation hydrogen fuel system 30 in response to the determined need for dissipating energy. In this context, the determined need for dissipating energy refers to the determined need for dissipating energy from the system 10, typically being a need for dissipating energy from the electric powertrain system 60 of the system 10.

In some examples, there is provided a computer program product comprising program code for performing, when executed by the processing circuitry 92, the method 100 as described above.

In some examples, there is provided a non-transitory computer-readable storage medium comprising instructions, which when executed by the processing circuitry 92, cause the processing circuitry 92 to perform the method 100 as described above.

It should be noted that the controller 90 may be an integral part of the powertrain system 60. In other examples, the controller 90 and the powertrain system 60 may be separate parts configured to communicate with each other. The controller 90 may e.g. be a part of a remote server or the like. Hence, in some examples, the system 10 comprises the powertrain system 60 and the controller 90, wherein the controller 90 is configured to be in communication with the powertrain system 60 so as to control energy or power utilization from the powertrain system 60, as described herein.

Further details of one example of a computer system that can be used as the controller 90 will now be described in relation to FIG. 6.

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device
interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A system 10 for a vehicle 1, the system comprising a hydrogen fuel storage system 20 for storing hydrogen fuel 22; a recirculation hydrogen fuel system 30 for transporting hydrogen fuel, the recirculation hydrogen fuel system having a fuel inlet 32 configured to be in fluid communication with the hydrogen fuel storage system and further a fuel return line 34 to the hydrogen fuel storage system, wherein the recirculation hydrogen fuel system is configured to be in fluid communication with a hydrogen fuel-consuming power source 40, the system further comprising an electrically powered compressor 50 disposed in the recirculation hydrogen fuel system; and wherein the electrically powered compressor is controllable to pressurize hydrogen fuel in the recirculation hydrogen fuel system in response to a determined need for dissipating energy.

Example 2: The system of example 1, further comprising an electric powertrain system 60 configured to provide power to the vehicle and further controllable as an electrical energy dissipating system for powering the electrically powered compressor in response to the determined need for dissipating energy.

Example 3: The system of example 2, wherein the electric powertrain system comprises an electric machine 62, the electric machine 62 being operable in a generator mode.

Example 4: The system of any preceding examples, wherein the hydrogen fuel storage system 20 is controllable to supply hydrogen fuel at a low-pressure level to the recirculation hydrogen fuel system, and the electrically powered compressor is controllable to pressurize hydrogen fuel in the recirculation hydrogen fuel system, so as to return hydrogen fuel of high pressure to the hydrogen fuel storage system.

Example 5: The system of any preceding examples, further comprising a cooler 38 configured to be in fluid communication with the recirculation hydrogen fuel system, and further configured to regulate a temperature of the hydrogen fuel in the recirculation hydrogen fuel system.

Example 6: The system of any preceding examples, further comprising a controller 90 configured to determine the need for dissipating energy responsive to a braking demand of the vehicle.

Example 7: The system of example 6, wherein the controller is configured to determine the braking demand by determining an amount of possible energy from a regenerative braking event of the vehicle.

Example 8: The system of example 6 or example 7, wherein the controller is configured to determine the need for dissipating energy using route topography data.

Example 9: The system of examples 6 to 8, wherein the controller is configured to control the compressor in response to data indicative of a load on the hydrogen fuel-consuming power source.

Example 10: The system of any preceding examples, wherein the hydrogen fuel-consuming power source is any one of a fuel cell system and an internal combustion engine system.

Example 11. An electric powertrain system comprising a system according to any of the previous examples.

Example 12. The electric powertrain system of example 11 further comprising a battery system.

Example 13. The electric powertrain system of example 11 further comprising a traction electric machine.

Example 14. The electric powertrain system of example 11 further comprising a junction unit.

Example 15: A vehicle 1 comprising the system of any of the preceding examples.

Example 16: A computer-implemented method for controlling a system 10 for a vehicle 1, the system comprising a hydrogen fuel storage system 20 for storing hydrogen fuel 22; a recirculation hydrogen fuel system 30 for transporting hydrogen fuel, the recirculation hydrogen fuel system having a fuel inlet 32 configured to be in fluid communication with the hydrogen fuel storage system and further a fuel return line 34 to the hydrogen fuel storage system, wherein the recirculation hydrogen fuel system is configured to be in fluid communication with a hydrogen fuel-consuming power source 40, the system further comprising an electrically powered compressor 50 disposed in the recirculation hydrogen fuel system; and wherein the electrically powered compressor is controllable to pressurize hydrogen fuel in the recirculation hydrogen fuel system, the method comprising: determining S10, by processing circuitry of a computer system, a need for dissipating energy from the system; and in response to the determined need for dissipating energy, controlling S20, by the processing circuitry, the electrically powered compressor to pressurize hydrogen fuel in the recirculation hydrogen fuel system.

Example 17. Method of example 16, further comprising determining the need for dissipating energy responsive to a braking demand of the vehicle.

Example 18. Method of example 17, further comprising determining the braking demand by determining an amount of possible energy from a regenerative braking event of the vehicle.

Example 19: A computer program product comprising program code for performing, when executed by the processing circuitry, the method of examples 16 to 18.

Example 20: A non-transitory computer-readable storage medium comprising instructions, which when executed by the processing circuitry, cause the processing circuitry to perform the method of any of examples 16 to 18.

The term "fluid communication" as used herein refers to a fluid connection between two components. As such, a component in fluid communication with another component typically means the two components are "fluidly connected". This phrase indicates that there is a path or channel between the components that allows fluids (liquids or gases) to move or be transferred from one to the other. The fluid connection can be direct or through a series of conduits, valves, pumps, or other components that facilitate the controlled flow of the fluid.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A system (10) for a vehicle (1), the system comprising
- a hydrogen fuel storage system (20) for storing hydrogen fuel (22),
- a recirculation hydrogen fuel system (30) for transporting hydrogen fuel, the recirculation hydrogen fuel system having a fuel inlet (32) configured to be in fluid communication with the hydrogen fuel storage system and further a fuel return line (34) to the hydrogen fuel storage system, the recirculation hydrogen fuel system further being configured to be in fluid communication with a hydrogen fuel-consuming power source (40, 40a), wherein the system further comprises an electrically powered compressor (50) disposed in the recirculation hydrogen fuel system, the electrically powered compressor being controllable to pressurize hydrogen fuel in the recirculation hydrogen fuel system in response to a determined need for dissipating energy.

2. The system of claim 1, further comprising an electric powertrain system (60) configured to provide power to the vehicle and further controllable as an electrical energy dissipating system for powering the electrically powered compressor in response to the determined need for dissipating energy.

3. The system of claim 2, wherein the electric powertrain system comprises an electric machine (62) operable in a generator mode.

4. The system of any preceding claims, wherein the hydrogen fuel storage system is controllable to supply hydrogen fuel at a low-pressure level to the recirculation hydrogen fuel system, and the electrically powered compressor is controllable to pressurize hydrogen fuel in the recirculation hydrogen fuel system, so as to return hydrogen fuel of high pressure to the hydrogen fuel storage system.

5. The system of any preceding claims, further comprising a cooler (38) configured to be in fluid communication with the recirculation hydrogen fuel system, and further configured to regulate a temperature of the hydrogen fuel in the recirculation hydrogen fuel system.

6. The system of any preceding claims, further comprising a controller (90) configured to determine the need for dissipating energy responsive to a braking demand of the vehicle.

7. The system of claim 6, wherein the controller is configured to determine the braking demand by determining an amount of possible energy from a regenerative braking event of the vehicle.

8. The system of claim 6 or claim 7, wherein the controller is configured to determine the need for dissipating energy using route topography data.

9. The system of claims 6 to claim 8, wherein the controller is configured to control the compressor in response to data indicative of a load on the hydrogen fuel-consuming power source.

10. The system of any preceding claims, wherein the hydrogen fuel-consuming power source is any one of a fuel cell system and an internal combustion engine system.

11. A vehicle (1) comprising the system of any of the preceding claims.

12. A computer-implemented method for controlling a system (10) for a vehicle (1), the system comprising a hydrogen fuel storage system (20) for storing hydrogen fuel (22 ); a recirculation hydrogen fuel system (30) for transporting hydrogen fuel, the recirculation hydrogen fuel system having a fuel inlet (32) configured to be in fluid communication with the hydrogen fuel storage system and further a fuel return line (34) to the hydrogen fuel storage system, wherein the recirculation hydrogen fuel system is configured to be in fluid communication with a hydrogen fuel-consuming power source (40), the system further comprising an electrically powered compressor (50) disposed in the recirculation hydrogen fuel system; and wherein the electrically powered compressor is controllable to pressurize hydrogen fuel in the recirculation hydrogen fuel system, the method comprising:
- determining (S10), by processing circuitry of a computer system, a need for dissipating energy; and
- in response to the determined need for dissipating energy, controlling (S20), by the processing circuitry, the electrically powered compressor to pressurize hydrogen fuel in the recirculation hydrogen fuel system.

13. Method of claim 12, further comprising determining the need for dissipating energy responsive to a braking demand of the vehicle.

14. A computer program product comprising program code for performing, when executed by the processing circuitry, the method of claim 12 or claim 13.

15. A non-transitory computer-readable storage medium comprising instructions, which when executed by the processing circuitry, cause the processing circuitry to perform the method of any of claim 12 or claim 13.
